# EUROPEAN PATENT SPECIFICATION

(11) **EP 3 926 326 B1**
(45) Date of publication and mention of the grant of the patent: **12.06.2024**
(21) Application number: 21179517.4
(22) Date of filing: 15.06.2021
(51) Int. Cl.: G01N 17/00

(54) **TEST APPARATUS AND METHOD FOR TESTING A SURFACE**
TESTVORRICHTUNG
APPAREIL D'ESSAIS

(30) Priority: 15.06.2020 DK PA202070383
(43) Date of publication of application: 22.12.2021
(73) Proprietor: Dannozzle Holding New ApS, 9530 Støvring (DK)
(72) Inventor: ERIKSEN, Jan, 9000 Aalborg (DK)
(74) Representative: Patrade A/S

(56) References cited:
- CN-A- 107 764 724
- CN-A- 110 132 832
- GB-A- 2 504 527
- US-A- 5 762 538
- US-A1- 2018 172 576
- Chen Chuan ET AL: "Electrochemical and Solid-State Letters Application of Inkjet Printing for Depositing Salt Prior to Atmospheric Corrosion Testing You may also like An adhesive bonding method with microfabricating micro pillars to prevent clogging in a microchannel Pin- PROBING THE IONIZATION STATES OF POLYCYCLIC AR", , 8 July 2010 (2010-07-08), pages 28-31, XP093050785, Retrieved from the Internet: URL:https://iopscience.iop.org/article/10. 1149/1.3473724/pdf [retrieved on 2023-05-31]
- Dassault Systèmes: "3D printer", , 1 January 2018 (2018-01-01), XP093050886, Retrieved from the Internet: URL:https://make.3dexperience.3ds.com/proc esses/material-jetting [retrieved on 2023-05-31]

## Description

### Field of the Invention

The present invention relates to a test apparatus for testing a surface as well as a method for testing a surface using a test apparatus according to the present invention.

### Background of the Invention

Historically a number of test methods have been developed in order to determine certain interesting characteristics of a surface. This may be interesting to a user, consumer, manufacturer or investor in that depending on the product in which the surface is integrated may then be expected to have a certain lifetime where the product exhibits the desired or promised characteristics.

Such surfaces may for example be surface cladding used in housing, paint used on woodwork, glass fibre, gel coat or other treated surfaces, but in particular the present invention has been found to show very reliable test results within the field of glass reinforced composite structures for example having a gelcoat finish such as for example used in wind turbine wings and turbine towers.

GB 2504527A, US 2018/172576 A1 and CN 110132832A each discloses test methods or apparatuses for testing a surface or conditions related to a surface.

One general problem with the well-recognized testing methods is the fact that they are carried out according to certain standards, for example as defined in ASTM or Euro-code. Common for these test methods is that they are carried out according to a standard regime where the test surface is exposed to certain predefined events such as for example artificial rain, frost and thaw and wind.

However, none of these test methods relates to an actual geographical position and as such although obtaining very good test results according to the standard methods in practice the surface characteristics may prove to be insufficient or lacking particular characteristics.

Consequently, there appears to be a need for a method of testing a surface as well as a test apparatus where the surface is tested according to the environment into which the product/surface is to be placed and have its life span.

### Object of the Invention

The present invention therefore addresses this need by providing a method of testing a surface using a test apparatus as defined in the claims. Illustrative examples are describe in the following including an apparatus which comprises a holding plane onto which holding plane the surface to be tested may be arranged, and where at least two different nozzles are arranged in a gantry distanced from the holding plane and directed such that the nozzles can direct a flow of testing media towards and impacting the holding plane, where the method comprises the following steps:
- determining the location where the surface to be tested is to be placed or used;
- retrieving samples of debris present at the location;
- creating at least two test fluids, which test fluids may be one or more suspensions containing at least part of some of the samples of debris, and/or means for introducing at least part of some of the samples of said debris into an airstream or liquid stream;
- arranging a sample of the surface to be tested in the holding plane;
- connecting a first nozzle to a first test fluid via a pump and conduits and a second nozzle via a pump and conduits to a second test fluid, and directing the first and second nozzles such that the nozzles will issue test fluid impacting against the surface;
- activating the gantry and the pump(s), such that the first and second nozzles will traverse the surface while issuing test fluid.

Particularly determining the location where the surface to be tested is to be placed or used is important in that when it is known where the surface is to be located, it is possible to retrieve samples of material or debris which due to the forces of nature at that exact geographical location may impact the surface.

At least within the context of the present invention debris shall be understood as any loose object, such as but not limited to sand, gravel, granules of biological matter such as seeds, fruits, kernels etc., salt flakes/crystals, salt water or brine, dust, ice crystals, hail and snow and the like minor items/objects which it may be contemplated that a surface in that particular environment may be exposed to, for example during a storm. It is clear that the environment in which a surface is to be arranged may vary widely, and as such the various forces and exposures to which a surface may be exposed during a life span vary greatly such that one surface treatment applied to a surface in one geographical location may be outstanding whereas in another location it might have a very short lifespan and as such exhibits inadequate characteristics.

This could for example be paint applied to a building surface. If the same paint is applied to a building surface in a coastal area in the northern regions, it will be exposed to a harsh, cold climate with a high degree of salinity in the air and may also be exposed to abrasion from sand and rock fibers whereas if the same paint is applied to a surface in an inland hot and dry climate, frost and thaw will not have an effect on the surface, but rather the surface might be exposed to extensive sunlight and degrading UV lighting, dust storms, excessive dryness etc.

It is clear that although it is the same material being applied to a building surface, the impact from the ambient environment will be vastly different depending on the location into which the surface is to be placed. Therefore, it will be natural to device a test method taking into account the actual geographical location and the ambient specific environment in that location.

### Description of the illustrative examples

Therefore, the present illustrative example as a fundamental part of initiating the test determines the location in which the surface to be tested is to be placed. Furthermore, samples of debris present at that location will be retrieved such that once the actual testing takes place the environment to which the surface is exposed is as close to the factual environment in which the surface will be positioned when in use. To this end it is recognized that for example hail may have different densities and sizes at different locations as will the density of sand, dust etc., although in general terms it is recognized that dust as such is a well-known phenomenon, but when it comes to particle size, size distribution, density etc. dust for example varies greatly.

For these reasons it is very important to retrieve samples of the debris from the location in which the surface is to be positioned.

The further step of creating at least two test fluids where the fluids may either be liquid suspensions or air streams into which dry or liquid matter is added or a combination of both is important in that this is where the actual conditions on site are simulated. It is to be understood that the term fluid but encompasses gasses and liquids, and furthermore may also be understood as a gas or liquid in which a particle (of debris) is suspended.

As the gantry is activated to travel along or across the holding plane and thereby the surface to be tested the nozzles will issue test fluid either as a liquid or as a gas such that the surface will be exposed to impact from these test fluids. In this manner a test method has been provided where although the test may be carried out in a laboratory, the conditions under which the surface is testes are very closely approximated to the actual geographical position/location into which the surface is to be placed.

In a further advantageous embodiment of the method a control unit is provided for controlling at least one pump, such that the pressure of the test fluid being issued from a nozzle may be controlled and varied, and/or that the flow of test fluid may be pulsated.

It is clear that depending on where the surface is to be placed, wind speed may vary such that for example the surface of a wind turbine wing has an extremely high velocity and as such will impact particles at a much greater speed than for example the sidewall of a building.

For these reasons it is interesting to be able to vary the pressure and thereby the speed of the test fluid such that the debris in the test fluid will impact the surface at various speeds and thereby at various energy levels such that it is possible to simulate both the side of the building and a wind turbine wing.

The method also in a further embodiment foresees that it is provided with means for controlling the temperature of the at least two test bullets in that the viscosity may be dependent on temperature and therefore by changing the temperature of the test fluids it is possible also to simulate various conditions.

In order to be able to impact the test sample surface from various angles the gantry is pre-programmed to travel in a pre-determined XY plane parallel to the holding plane, and optionally also in a Z-direction perpendicular to said XY plane.

For very homogenous surfaces such as for example the surface of a wind turbine wing this may not be so interesting, but for other non-plane surfaces such as for example wood, destined to be part of an exterior cladding of a building, the angle and direction of the impact of the test fluid issued from the nozzles may have an influence on the life expectancy of the surface.

In a further advantageous embodiment the test apparatus is arranged inside a climatic cell enclosing the test apparatus, where temperature, moisture, and air quality is controlled and monitored inside the climatic cell. In this manner it is possible to create a completely artificial climate surrounding the surface to be tested where this climate may be approximated to the actual destination and geographical location in which the surface is to be placed.

As already mentioned in the introduction an illustrative example is also directed to a test apparatus for testing a surface comprising a stand having a holding plane onto which holding plane the surface to be tested may be arranged, and where at least two different nozzles are arranged in a gantry distanced from the holding plane and directed such that the nozzles can direct a flow of testing media towards the holding plane.

Further advantageous embodiments of the test apparatus are mentioned in the depending apparatus claims and are provided in order to achieve the effects and advantages discussed above with reference to the test method.

### Description of the Drawing

The invention will now be discussed with reference to accompanying drawings wherein
- Figure 1: illustrates schematically an embodiment of the test apparatus
- Figure 2: illustrates a schematic nozzle
- Figure 3: schematically illustrates an overview of a possible system set-up in order to use the apparatus in a test method

### Detailed Description of illustrative examples

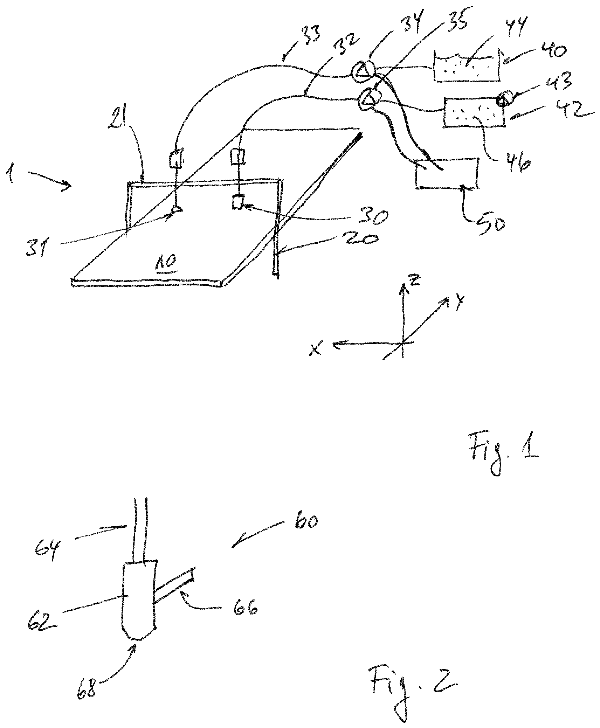

In figure 1 is schematically illustrated an embodiment of the test apparatus according to the invention. The test apparatus 1 comprises a holding plane arranged in an XY plane. A gantry 20 is provided such that part of the gantry 21 is superposed the holding plane 10. On the part of the gantry 21 above the holding plane 10 is in this embodiment arranged two nozzles 30, 31 where the nozzles by suitable conduits 32, 33 are connected to respective pumps 34, 35.

The pumps 34,35 in turn are connected to reservoirs/containers 40, 42 containing two test fluids 44, 46. In this embodiment the test fluid in container 40 is a liquid where debris is suspended in the liquid 44 such that as the pump 34 is activated the test fluid 44 from the reservoir 40 will be pumped through the conduit 33 and thereby will issue from the nozzle 31 towards the holding plane 10.

In the container 42 which is in this example a closed container under pressure created by a pump 43 debris suspended in air constitutes the test fluid 46. Again, by activating the pump 35 the test fluid 46 is guided through the conduit 32 such that it may issue from the nozzle 30 towards the holding plane 10.

In this schematically illustrated test apparatus no surface to be tested has been arranged on the holding plane, but it is clear that any surface which is provided on the holding plane 10 will be exposed to the test fluid issuing from the nozzles 30, 31.

The gantry 20 may travel along the holding plane 10 in the Y direction. It is clear that any suitable means such as for example a rail on rollers will provide the travelling ability of the gantry, but also other means are contemplated which facilitate a reliable movement of the gantry in the Y direction.

The nozzles 30, 31 arranged in the part 21 of the gantry 20 are also arranged such that they may be moved in the X direction across the holding plane whereby a surface arranged on the holding plane 10 may be exposed to test fluid in various directions and various areas. This may be interesting in that interface zones between various surface treatments may be especially fragile and therefore by being able to transverse the nozzles 30, 31 across the holding plane it is possible to test these interfaces as well.

Furthermore, the nozzles 30, 31 may be provided with means, for example spindles or rack-and-pinions such that their position in the Z direction relative to the holding plane 10 may be altered. For the sake of clarity all necessary devices, machinery and electrical installations for carrying out and controlling the movements of the gantry and nozzles are not illustrated.

The pumps 34, 35 may be connected to a control box 50 such that a certain regime may be pre-programmed in the control box whereby the pumps may be operated at various speeds, at intervals or in any desired manner such that the test fluid issuing from the nozzles 30, 31 may be impacted on the surface arranged on the holding plane 10 according to a pre-programmed sequence.

The nozzles 30, 31 are selected according to the test fluid such that the skilled person will select suitable nozzles, for example for issuing a test fluid being a gas with suspended particles or a liquid with suspended particles. Furthermore, the nozzles 30, 31 may be provided with various means such that for example if the desired test fluid shall simulate hail or ice cooling aggregates may be provided similar to the constructions used for snow canons and the like.

In figure 2 is illustrated a schematic nozzle 60 where the nozzle body 62 is provided with two inlets 64, 66. With this configuration it is possible for example by connecting the inlet 64 to a liquid such as for example water and the inlet 66 to a source of debris such as for example dust or sand to mix the liquid with the debris which it is desirable to impact on the test surface such that the mixing occurs in the nozzle body 32 before the test fluid is ejected through the nozzle opening 68.

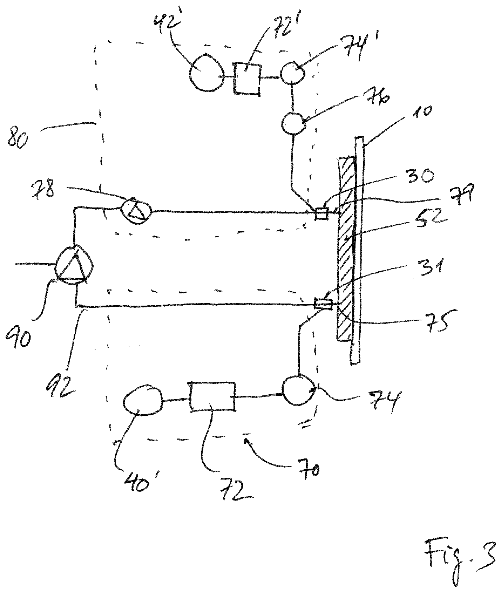

In figure 3 is schematically illustrated an overview of a possible system set-up in order to use the apparatus in a test method as described by the present invention.

A surface 52 to be tested is arranged on the holding plane 10. The nozzles 30, 31 are arranged such that they will issue test fluid towards the surface 52 such that the test fluid impacts the surface 52 with the desired impact. This impact is controlled by the two supply systems 70, 80 as will be explained.

The system 70 is connected to the nozzle 31 which in this embodiment is a low pressure nozzle suitable to receive test fluid in the pressure range 20-150 bar. A feeding pump 90 provides a relatively high amount of water to both systems 70, 80. The desired debris to the nozzle 31 is supplied directly into the nozzle where it is mixed with the water in the conduit 92 supplied from the main pump 90. The debris which may be selected from any type of debris suitable to be issued through a low pressure nozzle is applied in a reservoir 40'.

From the reservoir 40' the suspended debris is led through a dosing device 72 onto a mixing chamber 74. In the mixing chamber the debris suspended in the liquid arriving from the reservoir 40' is mixed such that as the test fluid is led to the nozzles 31 it is ready to be mixed with the water from the conduit 92 such that the impacting test liquid 75 has the desired characteristics with respect to viscosity, solid matter content etc.

Likewise, the supply system 80 comprises a reservoir 42 containing the desired type of debris for impacting on the surface 52. The debris is dosed by means of a dosing system 72' to a mixing chamber 74'. As typically the debris in the reservoir 42' will be matter which is to be suspended in an airstream or liquid the mixing chamber 74' ensures that a good thorough mixing is obtained such that the debris arrives at the surface 52 in the correct amount and density.

From the mixing chamber 74' the mixture is further led to a high pressure device 76 in connection with the high pressure nozzle 30. In this connection high pressure is to be understood as pressures in the range up to 1,000 or 1,200 bar. In order to obtain this very high pressure a booster pump 78 is provided downstream of the nozzle 30 such that the resulting test liquid 79 which impacts the surface 52 obtains the correct pressure.

In this example the surface 52 is being tested with two liquid test fluids, but it is also contemplated within the scope of the present invention that one or both or an additional test fluid may be provided in gas form whereby for example a supply system corresponding to the supply system 70 is provided, however, without the water supply line 72. Therefore additional nozzle arrangements may be arranged on the gantry (not illustrated). In this manner the mixing chamber 74 will be provided with a source of pressurized air in order to achieve a test fluid 75 impacting the surface having the suspended debris in the correct amount.

Naturally, the entire installation as illustrated in figure 3 may be enclosed in a climatic cell (not illustrated) whereby the ambient environment surrounding the surface 52 may be controlled with respect to temperature, humidity, CO2 content, NOX content and other relevant parameters present at the location where the surface 52 is to be installed for its lifetime.

## Claims

1. Method for testing a surface using a test apparatus (1) comprising a holding plane (10) onto which holding plane the surface (52) to be tested may be arranged, and where at least two different nozzles (30, 31) are arranged in a gantry (20) distanced from the holding plane and directed such that the nozzles can direct a flow of test fluids towards and impacting the holding plane (10), where the method comprises the following steps:
- determining a geographical location where said surface to be tested is to be placed or used;
- retrieving samples of debris present at said geographical location;
- creating at least two test fluids (44, 46) in a liquid and/or gas form by suspending at least part of the retrieved samples of debris in the shape of particles, crystals, granules, fibers or organic matter in the test fluids, - arranging a sample of the surface to be tested in the holding plane (10);
- connecting the first nozzle (31) to the first test fluid (44) via a first pump (34) and a first conduit (33) and the second nozzle (30) via a second pump (35) and a second conduit (32) to the second test fluid (46),
- directing the first and second nozzles (30, 31) such that the nozzles will issue the first and the second test fluids (44, 46) impacting against the surface, and
- activating the gantry (20) and the first and second pumps (34, 35) such that the first and second nozzles (30, 31) will traverse the surface while issuing the first and the second test fluids (44, 46).

2. Method according to claim 1, wherein a control unit (50) is provided for controlling at least one pump, such that the pressure of the test fluid being issued from a nozzle is controlled and varied, and/or that the flow of test fluid is pulsated.

3. Method according to claim 1 wherein means are provided for controlling the temperature of the at least two test fluids.

4. Method according to claim 1 wherein the gantry is pre-programmed to travel in a pre-determined XY plane parallel to the holding plane, and optionally also in a Z-direction perpendicular to said XY plane.

5. Method according to claim 1 wherein the test apparatus (1) is arranged inside a climatic cell enclosing the test apparatus, where temperature, moisture, and air quality is controlled and monitored inside the climatic cell.

6. Method according to any of claim 1-5, wherein the particles may be dust, sand and where the crystals may be ice, snow, pieces of rock, glass and where the granules may be dirt, clay, cellulose-based granules and where the fibers may be cellulose, rock-based or man-made fibers and where the organic matter may be insects, seeds, plants or parts thereof.

7. A test apparatus (1) for carrying out the process of claim 1 by issuing two different test fluids (44, 46) in liquid and/or gas form containing suspended debris in the shape of particles, crystals, granules, fibers or organic matter to a surface (52), the test apparatus (1) comprising
- a stand having a holding plane (10) onto which holding plane the surface to be tested may be arranged, wherein the holding plane defines an XY plane,
- a first reservoir (40) containing the first test fluid (44) in liquid and/or gas form containing the suspended debris in the shape of particles, crystals, granules, fibers or organic matter,
- a second reservoir (42) containing the second test fluid (46) in liquid and/or gas form containing the suspended debris in the shape of particles, crystals, granules, fibers or organic matter,
- a first pump (34) and a first conduit (33),
- a second pump (35) and a second conduit (32),
- at least two different nozzles (30,31) arranged in a gantry (20) distanced from the holding plane and directed such that the nozzles direct a flow of testing fluids towards the holding plane wherein the gantry (20) is configured to travel relative to the holding plane (10) and wherein the nozzles are configured to travel along a Z-axis perpendicular to the XY plane, and wherein the first nozzle (30) is connected to the first reservoir (40) containing the first test fluid (44) via the first pump (34) and the first conduit (33) and the second nozzle (31) is connected to the second reservoir (42) containing the second test fluid (46) via the second pump (35) and the second conduit (32), the first and second nozzles being directed such that the nozzles issue the two different test fluids impacting against the surface, and the gantry (20) and the pumps (34, 35) are configured to be activated such that the first and second nozzles (30, 31) traverse the surface while issuing said test fluids (44, 46).

8. Test apparatus (1) according to claim 7 wherein the gantry (20) is configured to travel relative to the holding plane (10), such that the nozzles (30,31) are moved in a XY plane parallel to the holding plane.

9. Test apparatus (1) according to any of claims 7-8, wherein the particles may be dust, sand and where the crystals may be ice, snow, pieces of rock, glass and where the granules may be dirt, clay, cellulose based granules and where the fibers may be cellulose, rock based or man-made fibers and where the organic matter may be insects, seeds, plants or parts thereof.

10. Test apparatus (1) according to claim 7, further comprising a climatic cell, wherein the apparatus is arranged inside the climatic cell, where said climatic cell comprises insulated walls, ceiling and floor and means for controlling one or more of the following characteristics of the air inside the climatic cell: temperature, humidity, salinity, CO2, NOx.

## Patentansprüche

1. Verfahren zum Testen einer Oberfläche unter Verwendung einer Testvorrichtung (1), umfassend eine Halteebene (10), auf der die zu testende Oberfläche (52) angeordnet werden kann, und wobei mindestens zwei verschiedene Düsen (30, 31) in einem Gantry (20) angeordnet sind, das von der Halteebene beabstandet und so ausgerichtet ist, dass die Düsen einen Strom von Testfluids auf die Halteebene (10) richten und auf diese auftreffen können, wobei das Verfahren die folgenden Schritte umfasst:
- Bestimmen eines geografischen Standorts, an dem die zu testende Oberfläche zu platzieren oder zu verwenden ist;
- Entnehmen von Schmutzproben, die an dem geografischen Standort vorhanden sind;
- Erzeugen von mindestens zwei Testfluids (44, 46) in flüssiger und/oder gasförmiger Form durch Suspendieren von mindestens einem Teil der entnommenen Schmutzproben in Form von Partikeln, Kristallen, Körnchen, Fasern oder organischem Material in den Testfluids,
Anordnen einer Probe der zu testenden Oberfläche auf der Halteebene (10);
- Verbinden der ersten Düse (31) mit dem ersten Testfluid (44) über eine erste Pumpe (34) und eine erste Leitung (33) und der zweiten Düse (30) mit dem zweiten Testfluid (46) über eine zweite Pumpe (35) und eine zweite Leitung (32),
- Ausrichten der ersten und zweiten Düsen (30, 31), sodass die Düsen das erste und das zweite Testfluid (44, 46) abgeben, die auf die Oberfläche auftreffen, und
- Aktivieren des Gantrys (20) und der ersten und zweiten Pumpe (34, 35), sodass die erste und zweite Düse (30, 31) die Oberfläche überqueren, während sie das erste und das zweite Testfluid (44, 46) abgeben.

2. Verfahren nach Anspruch 1, wobei eine Steuereinheit (50) zum Steuern von mindestens einer Pumpe vorgesehen ist, sodass der Druck des von einer Düse abgegebenen Testfluids gesteuert und variiert wird und/oder dass der Strom von Testfluid pulsiert.

3. Verfahren nach Anspruch 1, wobei Mittel zum Regeln der Temperatur der mindestens zwei Testfluids bereitgestellt sind.

4. Verfahren nach Anspruch 1, wobei das Gantry dazu vorprogrammiert ist, sich in einer vorgegebenen XY-Ebene parallel zu der Halteebene und optional auch in einer Z-Richtung senkrecht zu der XY-Ebene zu bewegen.

5. Verfahren nach Anspruch 1, wobei die Testvorrichtung (1) innerhalb einer die Testvorrichtung umschließenden Klimazelle angeordnet ist, wobei Temperatur, Feuchtigkeit und Luftqualität innerhalb der Klimazelle kontrolliert und überwacht werden.

6. Verfahren nach einem der Ansprüche 1 bis 5, wobei die Partikel Staub oder Sand sein können, die Kristalle Eis, Schnee, Felsbrocken oder Glas sein können, die Körnchen Erde, Ton oder Körnchen auf Zellulosebasis sein können, die Fasern Zellulose, Steinfasern oder Kunstfasern sein können und die organische Substanz Insekten, Samen, Pflanzen oder Teile davon sein kann.

7. Testvorrichtung (1) zum Durchführen des Verfahrens nach Anspruch 1 durch Abgeben von zwei verschiedenen Testfluids (44, 46) in flüssiger und/oder gasförmiger Form, die suspendierten Schmutz in Form von Partikeln, Kristallen, Körnchen, Fasern oder organischem Material enthalten, an eine Oberfläche (52), wobei die Testvorrichtung (1) Folgendes umfasst:
- ein Stativ mit einer Halteebene (10), auf der die zu testende Oberfläche angeordnet werden kann, wobei die Halteebene eine XY-Ebene definiert,
- einen ersten Behälter (40), der das erste Testfluid (44) in flüssiger und/oder gasförmiger Form enthält, das den suspendierten Schmutz in Form von Partikeln, Kristallen, Körnchen, Fasern oder organischem Material enthält,
- einen zweiten Behälter (42), der das zweite Testfluid (46) in flüssiger und/oder gasförmiger Form enthält, das den suspendierten Schmutz in Form von Partikeln, Kristallen, Körnchen, Fasern oder organischem Material enthält,
- eine erste Pumpe (34) und eine erste Leitung (33),
- eine zweite Pumpe (35) und eine zweite Leitung (32),
- mindestens zwei verschiedene Düsen (30, 31), die in einem von der Halteebene beabstandeten Gantry (20) angeordnet und so ausgerichtet sind, dass die Düsen einen Strom von Testfluids auf die Halteebene richten, wobei das Gantry (20) dazu konfiguriert ist, sich relativ zu der Halteebene (10) zu bewegen, und wobei die Düsen dazu konfiguriert sind, sich entlang einer Z-Achse senkrecht zu der XY-Ebene zu bewegen, und wobei die erste Düse (30) mit dem ersten Behälter (40), der das erste Testfluid (44) enthält, über die erste Pumpe (34) und die erste Leitung (33) verbunden ist und die zweite Düse (31) mit dem zweiten Behälter (42), der das zweite Testfluid (46) enthält, über die zweite Pumpe (35) und die zweite Leitung (32) verbunden ist, wobei die erste und die zweite Düse so ausgerichtet sind, dass die Düsen die beiden unterschiedlichen Testfluids ausgeben, die auf die Oberfläche auftreffen, und das Gantry (20) und die Pumpen (34, 35) dazu konfiguriert sind, aktiviert zu werden, sodass die erste und die zweite Düse (30, 31) die Oberfläche durchqueren, während sie die Testfluids (44, 46) ausgeben.

8. Testvorrichtung (1) nach Anspruch 7, wobei das Gantry (20) dazu konfiguriert ist, sich relativ zu der Halteebene (10) zu bewegen, sodass die Düsen (30, 31) in einer XY-Ebene parallel zur Halteebene bewegt werden.

9. Testvorrichtung (1) nach einem der Ansprüche 7-8, wobei die Partikel Staub oder Sand sein können, die Kristalle Eis, Schnee, Felsbrocken oder Glas sein können, die Körnchen Erde, Ton oder Körnchen auf Zellulosebasis sein können, die Fasern Zellulose, Steinfasern oder Kunstfasern sein können und die organische Substanz Insekten, Samen, Pflanzen oder Teile davon sein kann.

10. Testvorrichtung (1) nach Anspruch 7, ferner umfassend eine Klimazelle, wobei die Vorrichtung innerhalb der Klimazelle angeordnet ist, wobei die Klimazelle isolierte Wände, Decken und Böden sowie Mittel zum Steuern einer oder mehrerer der folgenden Eigenschaften der Luft innerhalb der Klimazelle umfasst: Temperatur, Feuchtigkeit, Salzgehalt, CO2, NOx.

## Revendications

1. Procédé d'essai d'une surface à l'aide d'un appareil d'essai (1) comprenant un plan de maintien (10), plan de maintien sur lequel la surface (52) d'essai peut être agencée, et où au moins deux buses différentes (30, 31) sont agencées dans un portique (20) éloigné du plan de maintien et orienté de telle sorte que les buses puissent diriger un flux de fluides d'essai vers et impactant le plan de maintien (10), où le procédé comprend les étapes suivantes :
- de détermination d'un emplacement géographique où ladite surface d'essai doit être placée ou utilisée ;
- de récupération d'échantillons de débris présents audit emplacement géographique ;
- de création d'au moins deux fluides d'essai (44, 46) sous forme liquide et/ou gazeuse en mettant en suspension au moins une partie des échantillons de débris récupérés sous forme de particules, cristaux, granules, fibres ou matière organique dans les fluides d'essai,
d'agencement d'un échantillon de la surface d'essai dans le plan de maintien (10) ;
- de connexion de la première buse (31) au premier fluide d'essai (44) par le biais d'une première pompe (34) et d'un premier conduit (33) et de la seconde buse (30) par le biais d'une seconde pompe (35) et d'un second conduit (32) au second fluide d'essai (46),
- de direction des première et seconde buses (30, 31) de telle sorte que les buses délivrent le premier et le second fluides d'essai (44, 46) impactant contre la surface, et
- d'activation du portique (20) et des première et seconde pompes (34, 35) de telle sorte que les première et seconde buses (30, 31) traverseront la surface tout en délivrant les premier et second fluides d'essai (44, 46).

2. Procédé selon la revendication 1, dans lequel une unité de commande (50) est prévue pour commander au moins une pompe, de telle sorte que la pression de fluide d'essai sortant d'une buse soit commandée et variée, et/ou que le flux de fluide d'essai soit pulsé.

3. Procédé selon la revendication 1, dans lequel des moyens sont prévus pour commander la température des au moins deux fluides d'essai.

4. Procédé selon la revendication 1, dans lequel le portique est préprogrammé pour se déplacer dans un plan XY prédéterminé parallèle au plan de maintien, et éventuellement également dans une direction Z perpendiculaire audit plan XY.

5. Procédé selon la revendication 1, dans lequel l'appareil d'essai (1) est agencé à l'intérieur d'une cellule climatique entourant l'appareil d'essai, où la température, l'humidité et la qualité de l'air sont commandées et surveillées à l'intérieur de la cellule climatique.

6. Procédé selon l'une quelconque des revendications 1 à 5, dans lequel les particules peuvent être de la poussière, du sable et où les cristaux peuvent être de la glace, de la neige, des morceaux de roche, du verre et où les granulés peuvent être de la saleté, de l'argile, des granules à base de cellulose et où les fibres peuvent être des fibres de cellulose, à base de roche ou artificielles et où la matière organique peut être constituée d'insectes, de graines, de plantes ou de parties de celles-ci.

7. Appareil d'essai (1) pour réaliser le procédé selon la revendication 1 en délivrant deux fluides d'essai différents (44, 46) sous forme liquide et/ou gazeuse contenant des débris en suspension sous forme de particules, de cristaux, de granules, de fibres ou de matière organique sur une surface (52), l'appareil d'essai (1) comprenant
- un support comportant un plan de maintien (10), le plan de maintien sur lequel la surface d'essai peut être agencée, dans lequel le plan de maintien définit un plan XY,
- un premier réservoir (40) contenant le premier fluide d'essai (44) sous forme liquide et/ou gazeuse contenant les débris en suspension sous forme de particules, cristaux, granulés, fibres ou matière organique,
- un second réservoir (42) contenant le second fluide d'essai (46) sous forme liquide et/ou gazeuse contenant les débris en suspension sous forme de particules, cristaux, granulés, fibres ou matière organique,
- une première pompe (34) et un premier conduit (33),
- une seconde pompe (35) et un second conduit (32),
- au moins deux buses différentes (30, 31) agencées dans un portique (20) éloigné du plan de maintien et orientées de telle sorte que les buses dirigent un flux de fluides d'essai vers le plan de maintien dans lequel le portique (20) est configuré pour se déplacer par rapport au plan de maintien (10) et dans lequel les buses sont configurées pour se déplacer le long d'un axe Z perpendiculaire au plan XY, et dans lequel la première buse (30) est reliée au premier réservoir (40) contenant le premier fluide d'essai (44) par le biais de la première pompe (34) et du premier conduit (33) et la seconde buse (31) est reliée au second réservoir (42) contenant le second fluide d'essai (46) par le biais de la seconde pompe (35) et du second conduit (32), les première et seconde buses étant orientées de telle sorte que les buses délivrent les deux fluides d'essai différents impactant contre la surface, et le portique (20) et les pompes (34, 35) sont configurés pour être activés de telle sorte que les première et seconde buses (30, 31) traversent la surface tout en délivrant lesdits fluides d'essai (44, 46).

8. Appareil d'essai (1) selon la revendication 7, dans lequel le portique (20) est configuré pour se déplacer par rapport au plan de maintien (10), de telle sorte que les buses (30, 31) sont déplacées dans un plan XY parallèle au plan de maintien.

9. Appareil d'essai (1) selon l'une quelconque des revendications 7 et 8, dans lequel les particules peuvent être de la poussière, du sable et où les cristaux peuvent être de la glace, de la neige, des morceaux de roche, du verre et où les granulés peuvent être de la saleté, de l'argile, des granules à base de cellulose et où les fibres peuvent être des fibres de cellulose, à base de roche ou artificielles et où la matière organique peut être constituée d'insectes, de graines, de plantes ou de parties de celles-ci.

10. Appareil d'essai (1) selon la revendication 7, comprenant également une cellule climatique, dans lequel l'appareil est agencé à l'intérieur de la cellule climatique, où ladite cellule climatique comprend des parois, un plafond et un sol isolés et des moyens pour commander une ou plusieurs des caractéristiques suivantes de l'air à l'intérieur de la cellule climatique : température, humidité, salinité, CO2, NOx.
